Europäisches Patentamt

European Patent Office

Office européen des brevets

(19)

(11) Veröffentlichungsnummer: **0 297 277 B1**

## (12) EUROPÄISCHE PATENTSCHRIFT

(45) Veröffentlichungstag der Patentschrift: **19.08.92**

(51) Int. Cl.⁵: **B62D 5/06**, B62D 6/02

(21) Anmeldenummer: **88108287.9**

(22) Anmeldetag: **25.05.88**

(54) **Servoventilanordnung.**

(30) Priorität: **02.07.87 DE 3721826**

(43) Veröffentlichungstag der Anmeldung:
**04.01.89 Patentblatt 89/01**

(45) Bekanntmachung des Hinweises auf die
Patenterteilung:
**19.08.92 Patentblatt 92/34**

(84) Benannte Vertragsstaaten:
**ES FR GB IT SE**

(56) Entgegenhaltungen:
**WO-A-86/02053**
**DE-A- 3 247 745**
**DE-A- 3 346 707**
**DE-A- 3 625 003**

(73) Patentinhaber: **DAIMLER-BENZ AKTIENGE-**
**SELLSCHAFT**
**Mercedesstrasse 136**
**W-7000 Stuttgart 60(DE)**

(72) Erfinder: **Röhringer, Arno**
**Gerlinger Weg 9**
**W-7257 Ditzingen 5(DE)**

## Beschreibung

Die Erfindung betrifft eine Servoventilanordnung mit
- hochdruck- und niederdruckseitigen Anschlüssen,
- zwei von der Hochdruckseite zur Niederdruckseite führenden parallelen Drosselstrecken mit in Reihe angeordneten hochdruck- und niederdruckseitigen steuerbaren Drosselstellen,
- zwei gesonderten, von den Drosselstrecken jeweils zwischen deren hochdruck- und niederdruckseitigen Drosselstellen abzweigenden Motoranschlüssen zum Anschluß von Ein- und Ausgangsleitungen eines Servomotors,
- einem die Drosselstellen simultan steuernden Steuerkolben, welcher zur Erzeugung einer steuerbaren Druckdifferenz zwischen den Motoranschlüssen bei Verstellung an der einen Drosselstrecke den Widerstand der hochdruckseitigen Drosselstelle erhöht sowie den Widerstand der niederdruckseitigen Drosselstelle vermindert und gleichzeitig an der anderen Drosselstrecke den Widerstand der hochdruckseitigen Drosselstelle vermindert sowie den Widerstand der niederdruckseitigen Drosselstelle erhöht,
- zwei gesonderten Wirkflächen des Steuerkolbens zugeordneten Kolbenarbeitsräumen, die bei Beaufschlagung mit unterschiedlichen Drucken eine der jeweiligen Verschiebung des Kolbens entgegenwirkende Kraft zu erzeugen gestatten, und
- einer zwischen den Motoranschlüssen angeordneten dritten Drosselstrecke, welche eine in Abhängigkeit von einer externen Steuergröße steuerbare Drossel sowie eine dazu in Reihe angeordnete Drossel aufweist, über die die Kolbenarbeitsräume miteinander kommunizieren.

Eine derartige Servoventilanordnung ist aus der DE-A 32 47 745 zur Steuerung einer Servolenkung bekannt. Nach dieser Druckschrift ist vorgesehen, die steuerbare Drossel der dritten Drosselstrecke in Abhängigkeit von der Fahrgeschwindigkeit des Fahrzeuges zu steuern, und zwar derart, daß die genannte Drossel bei gegen Null gehender Fahrgeschwindigkeit abgesperrt wird. Auf diese Weise wird erreicht, daß die dritte Drosselstrecke nur bei größeren Fahrgeschwindigkeit wirksam wird und zwischen den Kolbenarbeitsräumen des Steuerkolbens eine von der Druckdifferenz zwischen den Motoranschlüssen abhängige Druckdifferenz auftritt und dementsprechend ein mehr oder weniger großer Widerstand bei Betätigung des Lenkhandrades auftritt.

Aufgabe der Erfindung ist es nun, eine Servoventilanordnung zu schaffen, bei der die auf den Steuerkolben rückwirkenden Kräfte bei geringem konstruktiven Aufwand in sehr unterschiedlicher Weise variiert werden können.

Diese Aufgabe wird erfindungsgemäß dadurch gelöst, daß die dritte Drosselstrecke eine zu den anderen Drosseln dieser Drosselstrecke in Reihe geschaltete weitere Drossel aufweist, die durch den Druckabfall an einer der anderen Drosseln steuerbar ist.

Durch die erfindungsgemäße Anordnung lassen sich zwischen dem zur Betätigung des Lenkhandrades notwendigen Betätigungsmoment und der für den Servomotor nutzbaren Druckdifferenz eine Proportionalität erzielen, die durch ein - mehr oder weniger grob angenähert - parabelförmiges Kennlinienfeld wiedergegeben werden kann. Dementsprechend steigt das Betätigungsmoment stark überproportional zu der für den Servomotor nutzbaren Druckdifferenz an.

Bei einer zweckmäßigen Variante der Erfindung ist innerhalb der dritten Drosselstrecke zusätzlich eine durch die Druckdifferenz zwischen den Motoranschlüssen steuerbare Drossel angeordnet. Damit kann eine noch bessere Annäherung an ein parabelförmiges Kennlinienfeld erreicht werden.

Bei einer konstruktiv besonders bevorzugten Ausführungsform der Erfindung ist vorgesehen, daß die Kolbenarbeitsräume stirnseitig des Steuerkolbens angeordnet sind, daß der Steuerkolben von einer Längsbohrung durchsetzt ist, daß in der Längsbohrung des Steuerkolbens ein weiterer Kolben gegen Federkraft aus einer Normallage in entgegengesetzten Richtungen gleitverschiebbar geführt ist, daß der weitere Kolben von einer weiteren Längsbohrung mit Drosselstelle durchsetzt ist, daß der Steuerkolben und der weitere Kolben einander überlappende Radialöffnungen aufweisen, die einen von der relativen Verschiebung zwischen Steuerkolben und weiterem Kolben abhängigen Drosselwiderstand bilden und einen mit dem einen Motoranschluß verbundenen Raum sowie die weitere Längsbohrung des weiteren Kolbens auf einer Seite der darin angeordneten Drosselstelle miteinander verbinden, und daß der auf der anderen Seite dieser in weiteren Kolben angeordneten Drosselstelle liegende Kolbenarbeitsraum über die extern steuerbare Drossel mit dem anderen Motoranschluß bzw. einem damit verbundenen Raum kommuniziert.

Bei dieser Anordnung sind mit Ausnahme der extern steuerbaren Drossel sämtliche Drosselstellen der dritten Drosselstrecke innerhalb des Steuerkolbens angeordnet, so daß eine besonders einfache Konstruktion erreicht wird, denn im wesentlichen muß lediglich innerhalb des Steuerkolbens der weitere Kolben gegen Federkraft verschiebbar angeordnet werden.

Im übrigen wird hinsichtlich bevorzugter Merkmale der Erfindung auf die Ansprüche sowie die nachfolgende Erläuterung anhand der Zeichnung verwiesen, in der bevorzugte Ausführungsformen dargestellt sind.

Dabei zeigt

Fig. 1    eine schaltplanartige Darstellung einer Servolenkung eines Kraftfahrzeuges mit der erfindungsgemäßen Servoventilanordnung,

Fig. 2    ein erstes Beispiel einer Ausführungsform der dritten Drosselstrecke,

Fig. 3    den mit der Ausführungsform nach Fig. 2 erreichbaren Kennlinienverlauf,

Fig. 4    ein zweites Beispiel einer Ausführungsform der dritten Drosselstrecke,

Fig. 5    den damit erreichbaren Kennlinienverlauf,

Fig. 6    ein drittes Beispiel einer Ausführungsform der dritten Drosselstrecke,

Fig. 6a    ein abgeändertes Detail der Ausführungsform nach Fig. 6,

Fig. 7    den damit erreichbaren Kennlinienverlauf und

Fig. 8    ein Schnittbild einer Servoventilanordnung, bei der eine der Fig. 2 entsprechende dritte Drosselstrecke verwirklicht ist.

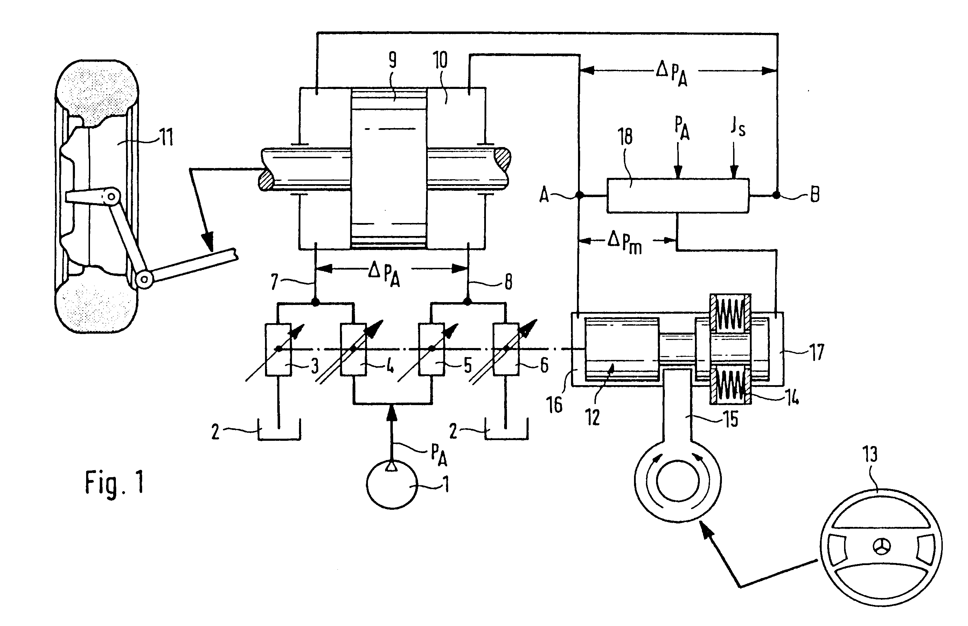

Gemäß Fig. 1 ist eine Servopumpe 1 saugseitig mit einem Reservoir 2 für Hydraulikmedium und druckseitig mit zwei zum Reservoir führenden Drosselstrecken verbunden, welche durch steuerbare Drosselstellen 3 und 4 bzw. 5 und 6 gebildet werden. Die Drosselstellen 3 bis 6 können simultan derart gesteuert werden, daß der Drosselwiderstand der Drosselstellen mit den geradzahligen Bezugszeichen 4 und 6 in der einen Richtung verändert, beispielsweise erhöht wird, während der Drosselwiderstand der Drosselstellen mit den ungeradzahligen Bezugszeichen 3 und 5 in der anderen Richtung verändert wird, beispielsweise abnimmt. Dadurch wird zwischen Motoranschlüssen 7 und 8, welche zwischen den Drosselstellen 3 und 4 bzw. 5 und 6 angeschlossen sind, eine Druckdifferenz $\Delta p_A$ in der einen oder anderen Richtung erzeugt. Die Motoranschlüsse 7 und 8 sind beidseitig eines Kolbens 9 eines als Servomotor angeordneten Kolben-Zylinder-Aggregates 10 angeschlossen, so daß der Kolben 9 von der Druckdifferenz $\Delta p_A$ beaufschlagt wird und die Lenkräder 11 einer gelenkten Fahrzeugachse mit entsprechender Kraft in der einen oder anderen Lenkrichtung betätigt.

Die in eine Servoventilanordnung integrierten Drosselstellen 3 bis 6 werden simultan von einem Steuerkolben 12 der Servoventilanordnung betätigt. Der Steuerkolben 12 wird bei Betätigung eines Lenkhandrades 13 gegen die Kraft eines Federaggregates 14 von einem Betätigungshebel 15 nach rechts oder links verstellt, welcher bei Betätigung des Lenkhandrades 13 einen von der Betätigungsrichtung sowie dem Lenkwiderstand abhängigen Stellhub ausführt.

Um zu vermeiden, daß die Servosteuerung ein labiles Fahrgefühl vermittelt und den Fahrer ungewollt dazu veranlaßt, die Servosteuerung zu übersteuern, können an den Stirnenden des Steuerkolbens 12 angeordnete Kolbenarbeitsräume 16 und 17 steuerbar mit unterschiedlichen Drucken beaufschlagt werden, so daß eine von einer Druckdifferenz $\Delta p_m$ abhängige Stellkraft auf den Steuerkolben 12 einwirkt, welche der jeweiligen Verschiebung des Steuerkolbens 12 entgegenwirkt.

Die Druckdifferenz $\Delta p_m$ wird mittels einer dritten Drosselstrecke 18 erzeugt, die zwischen die beiden Kammern des Kolben-Zylinder-Aggregates 10 bzw. zwischen die Motoranschlüsse 7 und 8 oder damit verbundene Räume geschaltet ist. In weiter unten dargestellter Weise wird die an der dritten Drosselstrecke 18 abgreifbare Druckdifferenz $\Delta p_m$ durch eine externe Steuergröße $I_s$, welche in der Regel von der Fahrgeschwindigkeit v abhängt, sowie durch die jeweils zwischen den Motoranschlüssen 7 und 8 vorliegende Druckdifferenz $\Delta p_A$ beeinflußt.

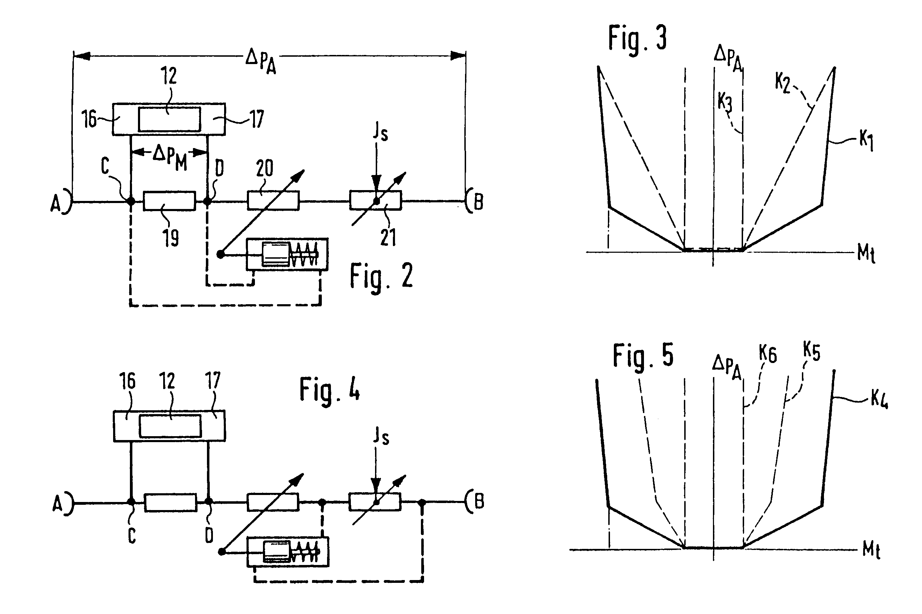

Die Figur 2 zeigt nun ein erstes Beispiel für eine zwischen die Punkte A und B in Fig. 1 einschaltbaren Drosselstrecke 18. Nach Fig. 2 besteht diese Drosselstrecke aus einer Drosselstelle 19 mit konstantem Drosselquerschnitt, einer steuerbaren Drosselstelle 20, deren Drosselquerschnitt von der an der Drosselstelle 19 abfallenden Druckdifferenz $\Delta p_m$ abhängt, sowie einer steuerbaren Drosselstelle 21, deren Drosselwiderstand in Abhängigkeit von einer externen Größe $I_s$ gesteuert wird. An den Punkten C und D der von den Drosselstellen 19 bis 21 gebildeten Drosselstrecke sind die Kolbenarbeitsräume 16 und 17 (vgl. Fig. 1) angeschlossen, so daß auf dem Steuerkolben 12 die Druckdifferenz $\Delta p_m$ wirkt, welche ihrerseits von der Druckdifferenz $\Delta p_A$ zwischen den Motoranschlüssen 7 und 8 sowie der externen Stellgröße $I_s$ abhängt.

Fig. 3 zeigt nun den mit dieser Anordnung erzielbaren Kennlinienverlauf. Dabei ist der Betrag der Druckdifferenz $\Delta p_A$ zwischen den Motoranschlüssen 7 und 8 in Abhängigkeit von dem am Lenkhandrad 13 aufzubringenden Betätigungs-Drehmoment $M_t$ aufgetragen. Dargestellt sind drei verschiedene Kurven $K_1$ bis $K_3$, welche die Verhältnisse beispielhaft für unterschiedliche Einstellungen der extern steuerbaren Drosselstelle 21 darstellen. Innerhalb eines Mittelbereiches, welcher durch die Vorspannung des Federaggregates 14 bestimmt wird, wird zwischen den Motoranschlüssen 7 und 8 keine Druckdifferenz $\Delta p_A$ erzeugt. Bei größeren Betätigungs-Momenten $M_t$ ergibt sich ein von der Einstellung der Drosselstelle 21 abhängiger Proportionalbereich. Bei noch höheren Betätigungs-Momenten $M_t$ wird die Druckdifferenz $\Delta p_A$ derart stark erhöht, daß praktisch eine Begrenzung des Betätigungsmomentes $M_t$ eintritt. Durch entsprechende Steuerung der Drosselstelle 21 können beliebige Kennlinien zwischen den Kurven $K_1$ und $K_3$ erzielt werden.

Die in Fig. 4 dargestellte Anordnung entspricht im wesentlichen der Anordnung nach Fig. 2, jedoch wird der Drosselquerschnitt der Drosselstelle 20 in Abhängigkeit von der Druckdifferenz gesteuert, welche an der Drosselstelle 21 abfällt.

Bei dieser Anordnung können die in Fig. 5 beispielhaft dargestellten Kennlinien $K_4$ bis $K_6$ erzielt werden, wobei wiederum durch entsprechende Steuerung der Drosselstelle 21 beliebige Punkte zwischen den Kurven $K_4$ und $K_6$ erreichbar sind. Dementsprechend wird ein variabler Proportionalbereich mit variabler Begrenzung des Betätigungsmomentes $M_t$ erzielt.

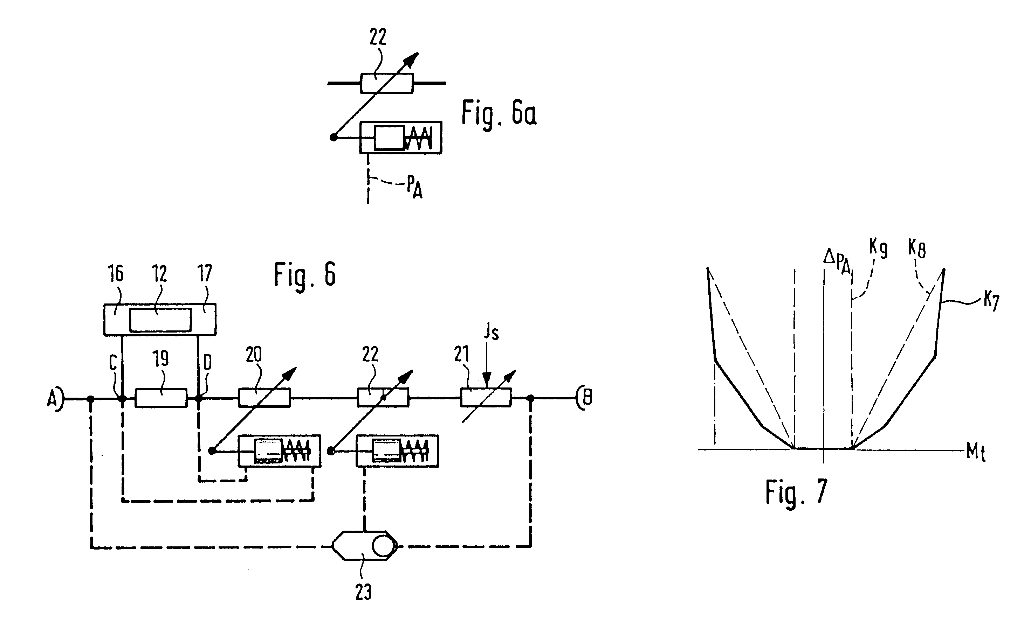

Die in Fig. 6 bzw. 6a dargestellte Anordnung entspricht der Anordnung nach Fig. 2, jedoch ist zusätzlich eine weitere Drosselstelle 22 vorgesehen, deren Drosselquerschnitt entweder unmittelbar von der Druckdifferenz $\Delta p_A$ oder vom Absolutdruck $p_A$ (vgl. auch Fig. 1) gesteuert wird. Im ersten Fall (Fig. 6) ist zwischen den Punkten A und B eine Leitung mit einem Doppelsitzventil 23 angeordnet, welches diese Leitung bei Auftreten einer Druckdifferenz zwischen den Punkten A und B dauernd geschlossen hält, jedoch ein Betätigungsorgan der Drosselstelle 22 jeweils mit dem Punkt A bzw. B verbindet, an dem der jeweils höhere Druck vorliegt. Bei Steuerung durch den Absolutdruck $p_A$ - (Fig. 6a) entfällt Ventil 23 und der Druck $p_A$ wirkt unmittelbar auf die Fläche der Drosselstelle 22.

Gemäß Fig. 7 lassen sich die beispielhaft dargestellten Kennlinien $K_7$ bis $K_{10}$ erzielen, d.h. ein variabler Proportionalbereich mit zwei Abschnitten unterschiedlicher Steigung sowie eine konstante Begrenzung des Betätigungsmomentes $M_t$. Durch entsprechende Steuerung der Drosselstelle 21 lassen sich wiederum sämtliche Punkte zwischen den Kurven $K_7$ und $K_{10}$ erreichen.

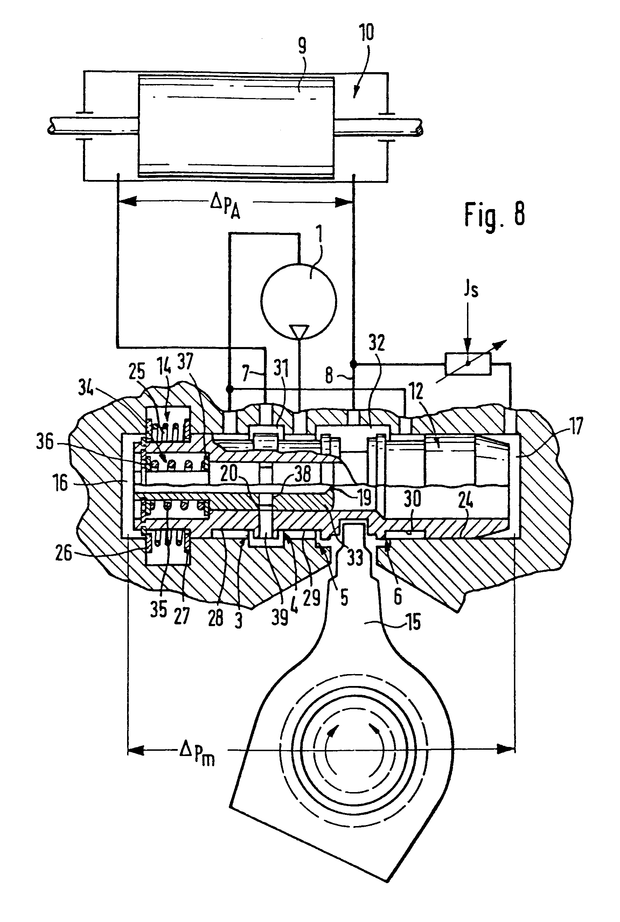

Bei der in Fig. 8 dargestellten Ausführungsform ist in einer Bohrung 24 eines Ventilgehäuses der Steuerkolben 12 gleitverschiebbar angeordnet. Die Verschiebung des Steuerkolbens 12 erfolgt mittels des Betätigungshebels 15, dessen freies Ende in eine Umfangsnut des Steuerkolbens 12 eingreift. Die Verschiebung des Steuerkolbens 12 erfolgt gegen die Kraft eines Federaggregates 14, welches aus einer Schraubendruckfeder 25 besteht, welche gegen zwei Ringscheiben 26 und 27 gespannt ist, die ihrerseits von der Schraubendruckfeder 25 gegen Ringstufen bzw. Anschläge an der Wandung der Bohrung 24 bzw. dem Außenumfang des Steuerkolbens 22 gespannt werden. Wenn beispielsweise der Steuerkolben 12 in Fig. 8 nach rechts verschoben wird, so nimmt die steuerkolbenseitige Ringstufe die Ringscheibe 26 mit, während die andere Ringscheibe 27 von der bohrungsseitigen Ringstufe festgehalten wird, so daß die Ringscheiben 26 und 27 unter zusätzlicher Spannung der Schraubendruckfeder 25 aneinander angenähert werden.

Zwischen den Stirnenden des Steuerkolbens 12, welche an den Enden der Bohrung 24 die Kolbenarbeitsräume 16 und 17 zum Mittelbereich der Bohrung 24 hin abdichten, sind den Steuerkolben 12 ringförmig umschließende Kolbennuten 28 bis 30 angeordnet, die mit gehäuseseitigen Ringnuten 31 und 32 zusammenwirken, indem zwischen den von den Kolbennuten 28 bis 30 und den gehäuseseitigen Ringnuten 31 und 32 gebildeten Ringkanten die Drosselstellen 3 bis 6 gebildet werden, deren Drosselquerschnitte bei Verschiebung des Steuerkolbens 12 erweitert bzw. verengt werden. Wird beispielsweise der Steuerkolben 12 in Fig. 8 nach links verschoben, so verengen sich die Drosselstellen 3 und 5, während sich der Querschnitt der Drosselstellen 4 und 6 erweitert.

Zwischen den gehäuseseitigen Ringnuten 31 und 32 und damit im Bereich der mittleren Kolbennut 29 mündet die Druckleitung der Servopumpe 1 in die Bohrung 24 ein. Jeweils seitlich außerhalb der gehäuseseitigen Ringnuten 31 und 32 und damit im Bereich der äußeren Kolbennuten 28 und 30 ist die Saugseite der Servopumpe 1 (oder ein nicht dargestelltes Reservoir) angeschlossen. An den gehäuseseitigen Ringnuten 31 und 32, d.h. zwischen den Drosselstellen 3 und 4 bzw. 5 und 6, sind die Motoranschlüsse 7 und 8 angeordnet, welche zu dem nur schematisch dargestellten Kolben-Zylinder-Aggregat 10 führen.

Der eine Motoranschluß 8 ist über eine Leitung, in der die durch eine externe Steuergröße beeinflußbare steuerbare Drosselstelle 22 angeordnet ist, mit dem Kolbenarbeitsraum 17 verbunden.

Innerhalb des Steuerkolbens 12 ist eine Längsbohrung angeordnet, in der ein weiterer Kolben 33 gleitverschiebbar geführt ist. Die Verschiebung erfolgt gegen den Widerstand eines Federaggregates 34, welches ähnlichen Aufbau wie das Federaggregat 14 besitzt. Das Federaggregat 34 besteht im wesentlichen aus einer Schraubendruckfeder 35, welche gegen zwei Ringscheiben 36 und 37 gespannt ist. Die Ringscheiben 36 und 37 liegen unter der Spannung der Schraubendruckfeder 35 einerseits an Ringstufen an, welche sowohl am Steuerkolben 12 als auch am weiteren Kolben 33 angeordnet sind, und andererseits an Anschlagringen, welche in entsprechenden Ringnuten am Innenumfang des Steuerkolbens 12 bzw. am Außenumfang des weiteren Kolbens 33 sitzen.

Der weitere Kolben 33 besitzt eine ihn durchsetzende Längsbohrung, an deren dem Kolbenarbeitsraum 17 zugewandten Ende die Drosselstelle 19 angeordnet ist.

Die Längsbohrung des weiteren Kolbens 33 ist auf der in Fig. 8 linken Seite der Drosselstelle 19 mit der gehäuseseitigen Ringnut 31 verbunden, von der der eine Motoranschluß 7 abzweigt. Dazu ist am weiteren Kolben 33 eine Radialbohrung 38 angeordnet, welche die Längsbohrung des Kolbens 33 mit einer denselben umschließenden Ringnut am Kolbenaußenumfang verbindet. Im Bereich dieser Ringnut ist im Steuerkolben 12 die Radialbohrung 39 angeordnet. Bei Verschiebung des weiteren Kolbens 33 relativ zum Steuerkolben 12 wird das zum weiteren Kolben 33 weisende Ende der Radialbohrung 39 teilweise vom weiteren Kolben 33 verschlossen, d.h. bei Relativverschiebung zwischen den Kolben 12 und 33 wird die durch die Radialbohrungen 38 und 39 gebildete Passage mehr oder weniger stark gedrosselt. Die Radialbohrungen 38 und 39 bilden also die Drossel 19 (vgl. Fig. 2), deren Drosselquerschnitt durch die Druckdifferenz beidseitig der Drosselstelle 19 bzw. die Druckdifferenz zwischen den Kolbenarbeitsräumen 16 und 17 gesteuert wird.

Die in Fig. 8 dargestellte Ausführungsform der Erfindung verwirklicht also das in Fig. 2 - in Verbindung mit Fig. 1 -dargestellte Bauprinzip.

## Patentansprüche

1. Servoventilanordnung mit
   - hochdruck- und niederdruckseitigen Anschlüssen,
   - zwei von der Hochdruckseite zur Niederdruckseite führenden parallelen Drosselstrecken mit in Reihe angeordneten hochdruck- und niederdruckseitigen steuerbaren Drosselstellen (3,4;5,6),
   - zwei gesonderten, von den Drosselstrecken jeweils zwischen deren hochdruck- und niederdruckseitigen Drosselstellen abzweigenden Motoranschlüssen zum Anschluß von Ein- und Ausgangsleitungen (7,8) eines Servomotors (9,10),
   - einem die Drosselstellen simultan steuernden Steuerkolben (12), welcher zur Erzeugung einer steuerbaren Druckdifferenz ($\Delta$ $P_A$) zwischen den Motoranschlüssen bei Verstellung an der einen Drosselstrecke den Widerstand der hochdruckseitigen Drosselstelle erhöht sowie den Widerstand der niederdruckseitigen Drosselstelle vermindert und gleichzeitig an der anderen Drosselstrecke den Widerstand der hochdruckseitigen Drosselstelle vermindert sowie den Widerstand der niederdruckseitigen Drosselstelle erhöht,
   - zwei gesonderten Wirkflächen des Steuerkolbens (12) zugeordneten Kolbenarbeitsräumen (16,17), die bei Beaufschlagung mit unterschiedlichen Drucken eine der jeweiligen Verschiebung des Kolbens entgegenwirkende Kraft zu erzeugen gestatten, und
   - einer zwischen den Motoranschlüssen (7,8) angeordneten dritten Drosselstrecke (18), welche eine in Abhängigkeit von einer externen Steuergröße ($I_s$) steuerbare Drossel (21) sowie eine dazu in Reihe angeordnete Drossel (19) aufweist, über die die Kolbenarbeitsräume (16,17) miteinander kommunizieren,

   **dadurch gekennzeichnet,**
   daß die dritte Drosselstrecke (18) eine zu den anderen Drosseln (19,21) in Reihe geschaltete weitere Drossel (20) aufweist, die durch den Druckabfall an einer der anderen Drosseln (19,21) steuerbar ist.

2. Servoventilanordnung nach Anspruch 1,
   **dadurch gekennzeichnet,**
   daß zusätzlich eine durch die Druckdifferenz zwischen den Motoranschlüssen (7,8) steuerbare Drossel (22) als Teil der dritten Drosselstrecke (18) angeordnet ist.

3. Servoventilanordnung nach Anspruch 1 oder 2,
   **dadurch gekennzeichnet,**
   - daß die Kolbenarbeitsräume (16,17) stirnseitig des Steuerkolbens (12) angeordnet sind,
   - daß der Steuerkolben (12) von einer Längsbohrung durchsetzt ist,
   - daß in der Längsbohrung des Steuerkolbens (12) ein weiterer Kolben (33) gegen Federkraft (34) aus einer Normallage in entgegengesetzten Richtungen gleitverschiebbar geführt ist,
   - daß der weitere Kolben (32) von einer weiteren Längsbohrung mit Drosselstelle (19) durchsetzt ist,
   - daß der Steuerkolben (12) und der weitere Kolben (33) einander überlappende Radialöffnungen (38,39) aufweisen, die einen von der relativen Verschiebung zwischen Steuerkolben (12) und weiterem Kolben (33) abhängigen Drosselwiderstand (20) bilden und einen mit dem einen Motoranschluß (7) verbundenen Raum sowie die weitere Längsbohrung des weiteren Kolbens (33) auf einer Seite der darin angeordneten Drosselstelle (19) miteinander verbinden, und

- daß der auf der anderen Seite dieser im weiteren Kolben (33) angeordneten Drosselstelle (19) liegende Kolbenarbeitsraum (17) über die extern steuerbare Drossel (21) mit dem anderen Motoranschluß (8) bzw. einem damit verbundenen Raum kommuniziert.

4. Servoventilanordnung nach einem der Ansprüche 1 bis 3,
   **dadurch gekennzeichnet,**
   daß der Steuerkolben (12) mittels Federaggregates (14) in eine Normallage gespannt ist.

5. Servoventilanordnung nach Anspruch 4,
   **dadurch gekennzeichnet,**
   daß eine Schraubendruckfeder (25) innerhalb eines Ringraumes, der zwischen dem Steuerkolben (12) und einer denselben umschließenden Gehäusebohrung (24) angeordnet ist, zwischen zwei relativ zum Gehäuse sowie zum Steuerkolben (12) beweglichen Widerlagerringen (26,27) eingespannt ist, die jeweils mit gehäuseseitigen und/oder steuerkolbenseitigen Anschlägen bzw. Ringstufen derart zusammenwirken, daß bei Verschiebung des Steuerkolbens (12) aus der Normallage jeweils der Widerlagerring (26 oder 27) am einen Ende der Schraubendruckfeder (25) an den gehäuseseitigen und der andere Widerlagerring am anderen Ende der Schraubendruckfeder (25) an den steuerkolbenseitigen Anschlägen bzw. Ringstufen anliegen und die Schraubendruckfeder (25) mit zunehmender Entfernung des Steuerkolbens (12) aus der Normallage zunehmend gespannt wird.

6. Servoventilanordnung nach einem der Ansprüche 1 bis 5,
   **dadurch gekennzeichnet,**
   daß die Radialöffnung (38) des weiteren Kolbens (33) in eine Außenumfangsnut am weiteren Kolben (33) und/oder die Radialöffnung (39) des Steuerkolbens (12) in eine Innenumfangsnut am Steuerkolben (12) münden.

**Claims**

1. Servo valve system with
   - connections on the high pressure and low pressure sides,
   - two parallel throttling paths leading from the high pressure side to the low pressure side with series-mounted controllable restrictors (3,4; 5,6) on the high pressure and low pressure sides,
   - two separate engine connections branching off from the throttling paths respectively between their restrictors on the high pressure and low pressure sides for the connection of input and output ducts (7, 8) of a servomotor (9, 10),
   - a control piston (12) simultaneously controlling the restrictors which, for the production of a controllable pressure difference ($\Delta P_A$) between the engine connections on setting to one throttling path increases the resistance of the restrictor on the high pressure side as well as lowers the resistance of the restrictor on the low pressure side, and at the same time, at the other throttling path, reduces the resistance of the restrictor on the high pressure side and also increases the resistance of the restrictor on the low pressure side,
   - two piston working spaces (16, 17) associated with separate working surfaces of the control piston (12) which, on impingement by different pressures, allow the production of a force counteracting the respective displacement of the piston, and
   - a third throttle path (18) disposed between the engine connections (7, 8) which has a throttle (21) controllable depending upon an external actuating variable ($I_s$) as well as a throttle (19) mounted in series therewith, through which the piston working spaces (16, 17) are in mutual communication,
   characterized in that the third throttle path (18) has a further throttle (20) mounted in series with the other throttles (19, 21) which is controllable by the pressure drop on one of the other valves (19, 21).

2. Servo valve system according to claim 1, characterized in that a valve (22) controllable by the pressure difference between the engine connections (7, 8) is mounted as part of the third throttle path (18).

3. Servo valve system according to either claim 1 or 2, characterized in that
   - the piston working spaces (16, 17) are mounted at the front of the control piston (12),
   - the control piston (12) has a longitudinal bore passing through it,
   - in the longitudinal bore of the control piston (12) a further piston (33) is slidingly guided against spring force (34) from a normal position in opposite directions,
   - the further piston (32) has, passing through it, a further longitudinal bore with restrictor (19),

- the control piston (12) and the further piston (33) have mutually overlapping radial openings (38, 39) which form a throttle resistance (20) dependent upon the relative displacement between the control piston (12) and the further piston (33), and joins together a space connected with one engine connection (7) with the further longitudinal bore of the further piston (33) on one side of the resistor (19) mounted therein, and,
- the piston working space (17) situated on the other side of this resistor (19) mounted in the further piston (33) communicates by means of the externally controllable throttle (21) with the other engine connection (8) or with a space connected therewith.

4. Servo valve system according to one of claims 1 to 3, characterized in that the control piston (12) is tensioned in a normal position by means of the spring unit (14).

5. Servo valve system according to claim 4, characterized in that a helical pressure spring (25) is mounted inside an annular space which is situated between the control piston (12) and a housing bore (24) surrounding it, between two thrust rings (26, 27) movable relative to the housing as well to the control piston (12), which thrust rings cooperate respectively with stops or annular steps on the housing or control piston sides in such a manner that on the displacement of the control piston (12) out of the normal position, respectively the thrust ring (26 or 27) at one end of the helical pressure spring (25) applies on the stops or annular steps on the housing side, and the other thrust ring on the other end of the helical pressure spring (25) applies on the stops or annular steps on the control piston side, and the helical pressure spring (25), with increasing distancing of the control piston (12) away from the normal position, is increasingly tensioned.

6. Servo valve system according to one of claims 1 to 5, characterized in that the radial opening (38) of the further piston (33) opens out into an external peripheral groove on the further piston (33), and/or the radial opening (39) of the control piston (12) opens out into an inner peripheral groove on the control piston (12).

**Revendications**

1. Système formant soupape d'assistance comportant:
- des raccords côtés haute pression et basse pression,
- deux voies d'étranglement parallèles, reliant le côté haute pression au côté basse pression et comportant des organes d'étranglement (3, 4 ; 5, 6) disposés en série et pouvant être commandés du côté haute pression et du côté basse pression,
- deux raccords de moteur séparés, partant des voies d'étranglement respectivement entre leurs organes d'étranglement côtés haute pression et basse pression et servant au raccordement des conduits d'entrée et de sortie (7, 8) d'un servomoteur (9, 10),
- un piston de commande (12) commandant simultanément les organes d'étranglement et qui, pour produire une différence de pression ($\Delta P_A$) pouvant être commandée entre les raccords de moteur lors d'une régulation dans une des voies d'étranglement, augmente la résistance de l'organe d'étranglement situé côté haute pression et diminue la résistance de l'organe d'étranglement situé côté basse pression, en produisant simultanément dans l'autre voie d'étranglement une diminution de la résistance de l'organe d'étranglement situé côté haute pression et une augmentation de la résistance de l'organe d'étranglement situé côté basse pression,
- deux chambres de travail (16, 17) séparées et associées aux surfaces actives du piston de commande (12) et qui permettent de produire, lors d'une sollicitation par des pressions différentes, une force agissant en opposition au déplacement correspondant du piston, et
- une troisième voie d'étranglement (18), disposée entre les raccords de moteur (7, 8) et qui comporte un étranglement (21), pouvant être commandé en fonction d'un paramètre de commande externe ($I_s$) ainsi qu'un étranglement (19) situé en série, les chambres de travail (16, 17) du piston communiquant entre elles par l'intermédiaire desdits étranglements,

caractérisé en ce que la troisième voie d'étranglement (18) comporte un autre étranglement (20) situé en série avec les deux premiers étranglements (19, 21) et qui peut être commandé par la baisse de pression dans un des deux premiers étranglements (19, 21).

2. Système formant soupape d'assistance selon la revendication 1, caractérisé en ce qu'il est prévu additionnellement, comme une partie de la troisième voie d'étranglement (18), un étranglement (22) pouvant être commandé par la différence de pression entre les raccords de moteur (7, 8).

3. Système formant soupape d'assistance selon la revendication 1 ou 2, caractérisé en ce que :
   - les chambres de travail (16, 17) du piston de commande (12) sont disposées sur les côtés frontaux de ce piston,
   - le piston de commande (12) est traversé par un alésage longitudinal,
   - dans cet alésage longitudinal du piston de commande (12), un autre piston (33) est guidé en opposition à la force d'un ressort (34) de façon à pouvoir coulisser dans des sens opposés à partir d'une position normale,
   - l'autre piston (32) est traversé par un autre alésage longitudinal pourvu d'une zone d'étranglement (19),
   - le piston de commande (12) et l'autre piston (33) comportent des ouvertures radiales (38, 39) qui se recouvrent mutuellement, qui forment une résistance d'étranglement (20) fonction de la translation relative entre le piston de commande (12) et l'autre piston (33) et qui relient entre eux un volume relié à un des raccords de moteur (7) et l'autre alésage longitudinal de l'autre piston (33) d'un côté de la zone d'étranglement (19) située dans celui-ci, et
   - la chambre de travail (17) du piston qui est située de l'autre côté de cette zone d'étranglement (19) prévue dans l'autre piston (33) communique, par l'intermédiaire de l'étranglement externe pouvant être commandé (21) avec l'autre raccord de moteur (8) ou bien avec un volume relié à celui-ci.

4. Système formant soupape d'assistance selon une des revendications 1 à 3, caractérisé en ce que le piston de commande (12) est maintenu dans une position normale au moyen d'un groupe de ressorts (14).

5. Système formant soupape d'assistance selon la revendication 4, caractérisé en ce qu'un ressort hélicoïdal de pression (25) est serré, à l'intérieur d'un volume annulaire qui est situé entre le piston de commande (12) et un alésage de carter (24) entourant celui-ci, entre deux anneaux de contre-appui (26, 27) mobiles par rapport au carter et par rapport au piston de commande (21) et qui coopèrent chacun avec des butées ou des gradins annulaires situés respectivement du côté du carter et/ou du côté du piston de commande de telle sorte que, lors d'une translation du piston de commande (12) à partir de la position normale, respectivement l'anneau de contre-appui (26 ou 27) situé à une extrémité du ressort hélicoïdal de pression (25) s'applique contre les butées ou les gradins annulaires situés du côté du carter tandis que l'autre anneau de contre-appui prévu à l'autre extrémité du ressort hélicoïdal de pression (25) s'applique contre les butées ou gradins annulaires situés du côté du piston de commande et le ressort hélicoïdal de pression (25) est serré progressivement à mesure que le piston de commande (12) s'écarte de la position normale.

6. Système formant soupape d'assistance selon une des revendications 1 à 5, caractérisé en ce que l'ouverture radiale (38) de l'autre piston (33) débouche dans une rainure circonférentielle extérieure prévue sur l'autre piston (33) et/ou l'ouverture radiale (39) du piston de commande (12) débouche dans une rainure circonférentielle intérieure prévue sur le piston de commande (12).

Fig. 1

Fig. 2

Fig. 3

Fig. 4

Fig. 5

EP 0 297 277 B1

Fig. 7

Fig. 6a

Fig. 6

Fig. 8